# EUROPEAN PATENT APPLICATION

(11) **EP 1 561 828 A1**
(43) Date of publication of application: **10.08.2005**
(21) Application number: 04256866.7
(22) Date of filing: 05.11.2004
(51) Int. Cl.: C22B 1/14, C22B 1/24, C22B 1/242, C22B 7/02, C21C 5/38, C21C 7/04, G03G 9/083, G03G 9/087

(54) **REFINING MATERIAL FOR REDUCTIVE STEEL REFINING AND GRANULATION METHOD THEREOF**

(30) Priority: 09.02.2004 JP 2004032532
(71) Applicant: Ricoh Company, Ltd., Tokyo 143-8555 (JP); Shinko Frex Inc., Hamamatsu City, Shizuoka Prefecture 433-8116 (JP)
(72) Inventor: Morii, Yoshihiro, Aoba-ku Yokohama-shi, Kanagawa (JP); Itoh, Tetsuo, Salai-gun, Fukui (JP); Asahi, Masami, Tagata-gun, Shizuoka (JP); Torii, Kazuma, Fukuroi-shi, Shizuoka (JP); Matsuura, Hiroyuki, Fukuroi-shi, Shizuoka (JP); Sugimoto, Takeshi, Hamamatsu-shi, Shizuoka (JP)
(74) Representative: Lamb, Martin John Carstairs

(57) **Abstract**

The present invention is directed to a granulating method of steel refining material for reductive steel refining, comprising the steps of: mixing at least steelmaking dust, aluminum ash and a resin component of a toner binder so as to form a mixture; and compressing and granulating the mixture so as to obtain a granulated steel refining material, wherein the resin component comprises an additive for enhanced lubricity and flowability, and no external heating is applied in the step of mixing and the step of compressing and granulating.

## Description

### BACKGROUND OF THE INVENTION

### Field of the Invention

The present invention is related to a granular material for processing of steelmaking dust and its manufacturing process, where the said material is used to collect valuable metal from composite powder-type dust consisting of metal and metal oxide generated with high temperature exhaust gas form steel-making apparatus such as electric furnace and converter, and wastes such as scale collected from annealing processes before and after steel milling or acid cleaning process (so called steelmaking dust), also the material aforementioned is made from aluminum ash molded and solidified with binder which is a resin material such as electrophotographic developer either sub-standard toner from its manufacturing process or those collected from the market for recycling, thus the material has high grain strength and high reduction efficiency.

### Description of the Related Art

There are various methods to reuse toner. In Japanese Patent Application Laid-Open (JP-A) No. 2001-003063, following topics are discussed; a) judging from toner component and property, setting objectives as being able to utilize the toner which is ultra-fine grain and easy to disperse and to provide an easy handling waste toner processing method, b) finding that 70 - 80% of toner in the market includes 40 % by weight to 50 %by weight of iron powder also the particle size of the toner is several micro meters up to 20 µm, c) it is conclude that to utilize the waste toner at iron mills, to be more specific, to mix the waste toner with the materials for sintering by a mixing apparatus then the mixture is sintered by the sintering apparatus, where the iron powder included in the waste toner is used as iron source and a part of resin included in the waste toner is burnt to heat as a substitute of powder coke, and the waste toner does not disperse because it is sintered by getting mixed with other raw materials for sintering for easier handling.

Also in JP-A No. 2003-138320, it is stated that conventional binder has several drawbacks such as needing water to granulate, difficult to maintain the form and generating a large volume of black fume to deteriorate the environment thus a binder is proposed to improve the drawbacks abovementioned which includes a resin having a suitable softening temperature as binding resin for toner, preferably 100 °C or lower, such as polyol resin, styrene-acrylic copolymer or polyester resin. Also it is described that the waste toner can be used for the binder as described above and it is advantageous to manufacture a flux for steel-making based on aluminum waste such as aluminum dross as well as aluminum ash because these do not need water and these are water-resistant.

In case of JP-A No. 2003-251323, a recycle system is proposed which is intended to provide an apparatus having efficient parallel processing capability of multiple recycling jobs. The system includes communication unit which receives input information regarding with subject of recycling and has CPU, RAM and ROM to send first sorting condition to sort the subject materials for recycling by disintegration condition, second sorting condition by raw material and third sorting condition by required following steps later to sort the subject materials to each corresponding steps to achieve the purpose of the invention.

However, the technology described in the JP-A No. 2001-003063 aforementioned defines that the recycling process is provided by inverse onerous contract (the toner supplier pays). Because, based on the above proposal, the resin (binder resin) as a major component of the toner does not provide enough added value. Though the resin included in the toner can be used to substitute coke, it is only a part and the majority is still exhausted as waste gas and treated by waste gas treatment apparatus in the steel-making process. Also, concentration of added toner at the sintering process is limited to 0.5% or lower because toner composition varies by the type of toners and the variation could affect reduction status of sintered minerals. Thus the toner is regarded as having low functional efficiency (therefore economically valueless) for sintering material.

Though the technology described in JP-A No. 2003-138320 mentioned before realizes a recycling of valuable material, it is limited to the toner which does not include iron (non-magnetic toner) as subject of recycling. Therefore, the process shown in JP-A No. 2001-003063 aforementioned has to be applied for magnetic toner.

On the other hand, it has historically been known that metal aluminum and carbonaceous reducer (organic carbonaceous material) are used to reduce the steelmaking dust to collect valuable metallic materials.

Recycling of the steelmaking dust has been tried in a various ways in the past. For example, a method to dry and crush the steelmaking dust and process it in a electric furnace using arc, also a method to put the dust in a furnace with reducing agents such as coke to reduce and collect metal oxide are proposed (Japanese Patent Application Publication (JP-B) No. 64-005233, JP-A No. 8-337827). However, these conventional methods require additional reducing agents thus the cost for recycling of the steelmaking dust exceeds the merit of recycling. Another proposal (JP-B No. 3146066, JP-A No. 11-302749) is made to efficiently collect valuable metals in the steelmaking dust though, the proposal has a problem since it needs vertical melting reducing furnace, a rather unique type, and the user has to have the furnace.

Though the recycling of the steelmaking dust as a resource with reducing agents such as coke in an electric furnace has been known, the reduction efficiency is low and material's powder shape inevitably makes working environment deteriorated at collection, transportation and input into the furnace. To avoid these problems as mentioned above, a proposal has been made to add water, starch or PVA as binder to granulate. However, such method only provides the grain having low grain strength after molding and it necessarily generates dust at transportation to the furnace and at pouring into the furnace making low collection efficiency and deterioration of work environment unavoidable. Though other granulating methods of steelmaking dust with higher grain strength are proposed (JP-A No. 2001-214222, JP-A No. 2001-294947), the methods require limited selection of binders to increases the cost and in case of utilizing waste plastic materials as binder, problems are generated that plastic contents might be higher and it affect the variation of final products also it limits granulation machine and grain configuration. Also, sub-standard portion from manufacturing plant of electrophotographic developer (such as toner) and electrophotographic developer collected from the market with copiers and printers mainly for recycling purpose are utilized as carbon source for blast furnace but these have a problem of being treated by inverse onerous contract.

The inventor of the present invention has already proposed a toner recycling system which consists of toner collection process for used toner and sub-standard toner among those produced in a plant up to a predetermined extent, and a granulating process where the toner collected as above is used as raw material and added with aluminum ash from aluminum refining process (JP-A No. 2002-196487).

### Objects and Advantages

The present invention aims for solving problems discussed above.

An object of the present invention is to improve a collection efficiency of valuable metal to enhance merit of collection, by using composite dust including metal and metal oxide collected from steel making facility such as electric furnace or converter with high temperature exhaust gas, and waste including Fe such as scale collected from annealing and acid wash processes before and after steel milling process (hereinafter, those dust and waste are called as "steelmaking dust") together with aluminum ash. Such steelmaking dust is mixed with aluminum ash so as to adjust basicity, thereby reduction reactivity is increased utilizing metal aluminium within the aluminium ash.

Another object of the present invention is to further enhance reduction capability and enable to recycle metal iron content of magnetic toner as iron resource, by mixing a developer for electrophotography with the steelmaking dust and aluminium ash, in which the mixture is softened or liquidized by heat applied at granulation, then the developer can be used as a binder to bind the powder materials of the mixture.

Yet another object of the present invention is to form a granulated refining material having high molding strength without deterioration under working environment, to efficiently collect valuable metals from steelmaking dust and the developer for electrophotography, and to increase resource recycling efficiency of waste developer.

### SUMMARY OF THE INVENTION

To resolve above issues, the inventors of the present invention made serious studies to reach the present invention by finding out; a) metal component within steelmaking dust can be efficiently collected by mixing the steelmaking dust with aluminum ash to adjust basicity and composition, b) metal oxide can be reduced efficiently by metal aluminum within aluminum ash which has high reduction capability, c) binding effect is increased when toner binder resin including additives or electrophotographic developer including toner binder resin are added because of excellent flowability of these materials help even dispersion and mixture also the resin included in the electrophotographic developer is softened or molten by heat at molding thus a binding effect over powder component is seen, d) resin and carbon provide reduction effect, and e) all electrophotographic developer including resin type as well as magnetic type can be used. Therefore, the "additive" at present invention means wax component, metallic salt with higher fatty acid such as zinc stearate, amides with higher fatty acid such as amide stearate, and fine particle of metal oxide such as alumina, titanium oxide and silica that are added to electrophotographic toner and developer to contain agglomerating property of toner and photo developer particles, also to increase lubrication property as well as flowability of those materials. These additives are sorted to types one of that is mixed with binder resin for toner at toner manufacturing process then (internal additive) exudates to the surface of toner particle at image-forming or fixing, and the other that is external additive added to toner or developing solution later (fine particles of alumina and fine particles of titanium are often sorted as this type). Waxes could exist simultaneously as internal additive and external additive in a same toner or developing solution. The ratio of those additive compared to 100 parts by weight of binder resin is preferably 0.01 parts by weight to 40 parts by weight, and 0.1 parts by weight to 30 parts by weight is more desirable.

The first aspect of the present invention is a granulating method of steel refining material for reductive steel refining, comprising the steps of: mixing at least steelmaking dust, aluminum ash and a resin component of a toner binder so as to form a mixture; and compressing and granulating the mixture so as to obtain a granulated steel refining material, wherein the resin component comprises an additive for enhanced lubricity and flowability, and no external heating is applied in the step of mixing and the step of compressing and granulating.

The second aspect of the present invention is a granulating method of steel refining material according to the first aspect, wherein the steel refining material is charged into electric furnace or ladle furnace so as to collect metal and metal oxide from the steelmaking dust.

The third aspect of the present invention is a granulating method of steel refining material according to any one of the first and second aspects, wherein the step of mixing comprises a step of kneading the steelmaking dust, the aluminum ash and the resin component.

The fourth aspect of the present invention is a granulating method of steel refining material according to the third aspect, wherein the step of kneading and the step of compressing and granulating generate heat, the heat generated in either step allows the resin component to bind the mixture.

The fifth aspect of the present invention is a granulating method of steel refining material according to any one of the first through fourth aspects, wherein the resin component is obtainable from a developer for electrophotography, and the step of mixing is a step of mixing the steelmaking dust, the aluminum ash and the developer containing the resin component.

The sixth aspect of the present invention is a granulating method of steel refining material according to the fifth aspect, wherein the developer is an off-specification product obtained in a process of developer manufacturing, or a recycled developer.

The seventh aspect of the present invention is a granulating method of steel refining material according to any one of the first through sixth aspects, wherein heating at 50 °C to 200 °C is applied in a subsequent step of the compressing and granulating, so as to impart high crush strength and low powder content to the granulated steel refining material.

The eighth aspect of the present invention is a granulating method of steel refining material according to any one of the first through seventh aspects, wherein the compressing is carried out by using a high pressure molder in the step of compressing and granulating.

The ninth aspect of the present invention is a refining material for reductive refining of steel, which comprises: steelmaking dust, aluminum ash and a resin component of a toner binder wherein the resin component comprises an additive for enhanced lubricity and flowability.

The tenth aspect of the present invention is a refining material according to the ninth aspect, wherein the resin component is obtainable from a developer for electrophotography, and the refining material comprises the steelmaking dust, the aluminum ash and the developer containing the resin component.

The eleventh aspect of the present invention is a refining material according to the tenth aspect, wherein the developer is an odd-specification product obtainable in a process of developer manufacturing, or a recycled developer.

The twelfth aspect of the present invention is a refining material according to any one of the tenth or eleventh aspects, wherein the content of steelmaking dust is from 30 % by weight to 80 % by weight, the content of aluminum ahs is from 10 % by weight to 50 % by weight, and the content of developer is from 2 % by weight to 20 % by weight.

The thirteenth aspect of the present invention is a refining material according to any one of the ninth through twelfth aspects, wherein the content of additive is from 0.01 parts by weight to 40 parts by weight relative to 100 parts by weight of the resin component.

The fourteenth aspect of the present invention is a refining material according to any one of the ninth through thirteenth aspects, wherein the additive is at least one of metal oxide, salt of higher fatty acid, higher fatty acid amide, and wax.

The fifteenth aspect of the present invention is a refining material according to the fourteenth aspect, wherein the additive comprises zinc stearate.

The sixteenth aspect of the present invention is a refining material according to any one of the ninth through fifteenth aspects, wherein the steelmaking dust contains metal and metal oxide, the metal and metal oxide are collectable by charging the refining material into electric furnace or ladle furnace.

The seventeenth aspect of the present invention is a refining material according to any one of the ninth through sixteenth aspects, wherein the refining material is obtainable from the process comprising the steps of: mixing at least the steelmaking dust, the aluminum ash and the resin component so as to form a mixture; and compressing and granulating the mixture so as to obtain the granulated steel refining material, wherein no external heating is applied in the step of mixing and the step of compressing and granulating.

The eighteenth aspect of the present invention is a refining material according to the seventeenth aspect, wherein the step of mixing comprises a step of kneading the steelmaking dust, the aluminum ash and the resin component.

The nineteenth aspect of the present invention is a refining material according to the eighteenth aspect, wherein the step of kneading and the step of compressing and granulating generate heat, the heat generated in either step allows the resin component to bind the mixture.

The twentieth aspect of the present invention is a refining material according to the seventeenth aspect, wherein heating at 50 °C to 200 °C is applied in a subsequent step of the compressing and granulating.

The present invention mixes steelmaking dust collected from steel making processes and steel milling processes with aluminum ash and a developer for electrophotography, adjusts basicity or composition of the mixture, applies compression molding heat or heating, and granulates. By charging the grain into electric furnace or ladle furnace, a reduction capability is enhanced as a result of binding effect, carbon content, and resin component content of the developer for electrophotography, as well as allowing an iron content thereof to recycle as iron resource.

In the present invention, it is preferable to use a developer for electrophotography containing a large amount of binder resin, such as a resinous toner, in view of binding effect. It is also preferable to use a developer for electrophotography containing magnetic ferrite in view of collection of valuable metal for recycling steelmaking dust. At the current situation, majority of the developer containing magnetic ferrite is not used as recourse, thus utilization of such developer is preferable in view of environmental protection and recycling.

The developers related to the present invention are powder and usually include wax as an external additive so as to have high flowability at normal temperature and to easily mix with other components. Also alumina is included to adjust its basicity and to inhibit the increase of melting point. CaO, a typical agent to eliminate sulfur component has a high melting point as 2750 °C, is not required only to maintain high basicity for efficient desulfurization though, a volume application of CaO is necessary to maintain flowabilty of slugg corresponding to SiO₂ content as much as CaO/SiO₂ = 2.5 mol to 3.0 mol. Therefore, resulfurization is prevented at reduction step where mainly sulfur and oxygen are eliminated, steel running-off step and off-furnace refining step (a step following an oxidization step which eliminate Si (including residual metal Si for deoxidization in the molten steel), P and C, where mainly S and O are eliminated from molten steel). Also, reflecting the recent toner resin characteristics of low melting point and quick settlement responding to the requirement for energy saving and quick function for electrophotographic devices, it can be mixed with aluminum ash and steelmaking dust evenly, and by mixing made of mechanical force at agitation and mixing or pressurized molding to make granulating (briquette making) easy, also with high mechanical strength after cooled down and solidified, it provides a high strength grain for refining. In addition, the refining process of steelmaking dust is generally delegated to Zinc collection contractor with a payment of process fee. Since the zinc content of the present invention is higher than that of steelmaking dust, the process fee is expected to be discount in proportion of the amount of the collected zinc. The zinc content of the steelmaking dust is generally estimated as 15 % to 20%, but the zinc content of the present invention is increased by zinc obtainable from the zinc stearate within the developer.

By using resin which flowability is enhanced with external additive as binder, high mold strength grain with high reduction efficiency is provided and it means the grain made from steelmaking dust characterized by an efficient recycling of valuable metal with improved reduction of metal and metal oxide within the steelmaking dust. Since this process utilizes materials of sub-standard portion from manufacturing process and recycled ones from market, it is very advantageous for environment as well as economy.

As aluminum ash mainly consists of metal aluminum and alumina, by using those from waste aluminum of aluminum melting steps such as aluminum refining process and aluminum molding process, or using wastes which is not effectively collected as molten aluminum because of configuration or surface area, it is very advantageous for environment as well as economy.

A high reduction capacity and high granulating mold strength grain, which is characterized by using a mixture of steelmaking dust and aluminum ash with adjusted contents as major raw material, with electrophotographic developer as an additive for binding purpose to be used to collect metal and metal oxide included in the steelmaking dust, is obtained.

### DESCRIPTION OF THE PREFERRED EMBODIMENTS

The mixed particle of metal and metal oxide used as steelmaking dust in the present invention is generated and collected in the processes of electric furnace and other steel making processes, and scales (Fe and small amount of Fe suboxide) used are collected from acid cleaning and annealing steps before and after milling process. In case of using dust collected by wet scrubber or scales generated and collected at cleaning process, those may contain a lot of water thus it is preferable to eliminate water to a certain extent.

The steelmaking dust used in the present invention can provide valuable metal recycling from ordinary steel, but the stainless steelmaking dust is more economically effective because it can recycle higher value metals such as Ni and Cr.

The "developer for electrophotography" stated in the present invention includes materials such as lycopodium particle, two-part developer comprising colored resin powder and glass beads, one-part non-magnetic insulating atomized particle, one-part non-magnetic insulating toner, two-part developer comprising electroscopic powder (toner) and magnetic carrier (diameter: 50 µm to 700 µm), conductive toner, partially conductive magnetic-toner, two-part developer comprising toner and binder carrier, insulating magnetic-toner, two-part developer comprising insulating magnetic-toner and conductive magnetic-powder (magnetic carrier), magnetic-toner consisting of 2 different type of toners that differs in particle size and frictional electrical resistance, and those are added with additives for enhanced lubricity and flowability. The additives include metal oxide such as alumina, titanium oxide and silica, metallic salt of higher fatty acid such as zinc stearate, higher fatty acid amide such as stearic acid amide, wax, and the like.

As abovementioned, the developer used in the present invention is powder material which has high flowability at normal temperature and easy to mix with other materials, and the basicity thereof is adjusted and the melting point of the refining material is so maintained as not to increase. Therefore, resulfurization at reduction step where mainly S and O are eliminated, steel output step and off-furnace refining step (a step mainly eliminate S and O from molten steel) is prevented. In addition, the developer is easily fused and has a low viscosity at melted state, reflecting recent toner resin characteristic such as low temperature and quick fixation, thus the developer is evenly mixed with aluminum ash and steelmaking dust, melt-kneaded with an application of mechanical force through stirring, compression molding and the like, thereby easily being granulated (forming briquette). The thus obtained granulated refining material has high strength. The steelmaking dust is expected to show a lower processing cost because its zinc content is increased by that from zinc stearate. It is possible to judge whether a refining material is based on the present invention or not by seeing property of binder resin, property of external additive and size of colorant particle. Ordinary MP (melting point) of the resin for toner binder is, from viewpoints of fixing and heat resistant capability as a toner image recording medium over high quality paper, 180 °C or less than that, preferably 140 °C or less. Additives used are, as aforementioned, metal oxide such as alumina, titanium oxide and silica, metallic salt of higher fatty acid such as zinc stearate, higher fatty acid amide such as stearic acid amide, and wax. Since the average particle size of toner is usually 4 µm to 10 µm, a particle size of colorant included in the toner is naturally less than that of the toner, which is much smaller than a particle size of ordinary colorant.

By using the resin with enhanced flowability by additives as a binder, the granulated material with high reduction efficiency and high molding strength is obtained. The granulated material refining from the steelmaking dust works for efficient recycling of metal and metal oxide contained in the dust. It also utilizes, as a developer, off-specification product obtained in a process of developer manufacturing, or a recycled developer collected from market, it is very advantageous for environment and economy.

As aluminum ash mainly consisting of metal aluminum and alumina, it is made from wastes collected from aluminum refining and casting processes, or wasted portion of molten aluminum which is difficult for recycling due to configuration or surface area, thus it is very advantageous for environment and economy.

A granulated material refined from steelmaking dust, characterized by recycling of metal and metal oxide as valuable metal, is obtained by using a mixture of the steelmaking dust and the aluminum ash as major component also added with the developer for electrophotography as binder, to have high reduction efficiency and high mold strength.

Hereinafter, the present invention is more specifically described.

At preparation of raw materials, the water content of the steelmaking dust is adjusted to 10 % by weight or less by means of natural seasoning, or a dryer such as rotary kiln, tunnel furnace or electric furnace.

Using mixer or suitable means, 30 % by weight to 80 % by weight of the steelmaking dust, 10 % by weight to 50 % by weight of the aluminum ash, and 2 % by weight to 20 % by weight of the developer for electrophotography are thoroughly mixed. In the case that the steelmaking dust and the aluminum ash for use require an adjustment of properties thereof, aluminium based additives may be add, and the added amount thereof is suitably adjusted depending on compositions or particle sizes of the steelmaking dust, aluminum ash and developer. The developer may be used singly or in combination of two or more.

Then the mixture described above is compressed granulated to form a granulated refining material. A high pressure molder which generates enough heat is desirable for this forming step though, machines generating low heat such as low pressure molder or pelletizer might work as well. When heat at 50°C to 200°C is applied to the material after compressing and granulating, the granulated refining material attains higher crush strength and lower powdering rate, thereby the granulated refining material is able to be reused as a material for electric furnace.

Since the granulated refining material from steelmaking dust uses the developer for electrophotography as binder, it is a fine particle with high flowablity to make a good dispersion over whole raw materials even with a small amount of addition. Thus it makes the granulated refining material having a high hardness and low powdering rate also makes it a very safe binder without potential fire, contrary to using HARTALL which could start fire by heat.

Since the major components of the developer are organic materials, those are burnt off at electric furnace, ladle furnace or converter thus no issue to increase steelmaking dust and it is an effective additive as reduction agent and heat generator.

As aforementioned, the present invention uses the steelmaking dust, the aluminum ash and the developer for electrophotography to make the granulated refining material to make the components of the dust recyclable as resources of Fe, Ni or Cr sources thus it can reduce steel making cost and is very advantageous for economy.

Though there are many plastic wastes used as binders, it is necessary to make them fine particle to show binding effect with small volume usage. Therefore, ordinary plastics, requiring complicated processes to make a fine particle because of increasing viscosity affected by the heat generated, costs a lot and is not suitable for granulating of steelmaking dust from cost evaluation viewpoint.

Though the present invention is more specifically explained referring to the embodiments hereinafter, it is not limited to those embodiments.

### (Embodiment 1)

The property of binder and binding effect were observed by forming a granulated refining material using a developer for electrophotography, i.e., two-part resinous toner and one-part magnetic toner as well as a plastic material which is also used as binder for fuel or reduction agent.

Ordinary waste plastic materials are, for example, plastic bottle, bag, packaging material, film, tray, cup, magnetic card, magnetic tape, fleconbag, board, coated wire, household electrical goods, office supply and automobile part. Several of these were crushed and mixed by dual-axis low speed cutter (made by FUJI SEIKI Co. Ltd, Model:FC-22/100) to make an intermediate batch of materials then it was processed by fine crushing high speed cutter (SUPER ALLOY CUTTING, made by Tai Chong Enterprise Co. Ltd, Model:K.G/CY 001) (however, in case of micro crushing test, a stamp mill for micro crushing (made by CMT Co. Ltd, VIBRATING SAMPLE MILL, Model:Ti-100) is used) to make the crushed mixture of plastic materials capable of being mixed within steelmaking dust, then sorted by circular vibration sieving machine (made by KOWA KOGYO KK, Model:KGO-1000) to make the size of whole particles go through mesh 100 (150 µm or less).

Steelmaking dust, aluminum ash, and each of two-part resinous toner, one-part magnetic toner and plastic powder were mixed with contents shown in Table 1. 100 kg of the mixture were mixed by V-type mixer (made by SANEI KK, Model:OV-II-130), mortar mixer (made by TOKAI Machinery KK, Model:Mini3) and a mixer (made by SHINKO FLEX KK, a modified mixer/tester having vanes within a drum and drum itself rotates) for 15 minutes, then the mixture was granulated by SHINTOKOGYO Briquette Machine (made by SHINTOKOGYO Ltd, Model:BCS-25) and the molding strength (crush strength) of the granulated material at a predetermined temperature was measured by crush tester (made by STRICT OBSERVANCE IMADA, Model:DPSHII-R).

The result of crush strength test is shown in Table 2. In case of the developer, crush strength was increased proportionally to amount of additives and heating temperature though, the crush strength of plastic powder was lower than those of the developer and crush strength was not proportional to added amount. The numbers shown in Table 2 are average values and the range of 10 data point per sample of the developer was within 20% though, the variation in case of plastic powder exceeded 50% in some samples thus apparently there was a poor dispersion. This is because that external additives are used for the developer to improve flowability and it helps the granulated material increase dispersiveness and even small addition can be distributed well over whole material to show necessary property for a binder, whereas plastic powder has poor dispersiveness and larger amount of addition could provide more regulated binding effect and less peaky total strength but composition of product is not satisfactory.

**[Table 1]**

| SAMPLE NO. | MATERIAL CONTENT (% BY WEIGHT) | | | | |
|---|---|---|---|---|---|
| | STEEL DUST | ALUMINUM ASH | TWO-COMPONENT TONER | ONE-COMPONENT TONER | PLASTIC POWDER |
| 1 | 57 | 40 | 3 | - | - |
| 2 | 55 | 40 | 5 | - | - |
| 3 | 52 | 40 | 8 | - | - |
| 4 | 50 | 40 | 10 | - | - |
| 5 | 57 | 40 | - | 3 | - |
| 6 | 55 | 40 | - | 5 | - |
| 7 | 52 | 40 | - | 8 | - |
| 8 | 50 | 40 | - | 10 | - |
| 9 | 57 | 40 | - | - | 3 |
| 10 | 55 | 40 | - | - | 5 |
| 11 | 52 | 40 | - | - | 8 |
| 12 | 50 | 40 | - | - | 10 |

**[Table 2]**

| SAMPLE NO. | CRUSH STRENGTH (kg/mm²) | | | | | | | | |
|---|---|---|---|---|---|---|---|---|---|
| | TEMPERATURE (°C) | | | | | | | | |
| | A. T. | 40 | 60 | 80 | 100 | 120 | 150 | 200 | 250 |
| 1 | 50.7 | 53.6 | 60.4 | 66.8 | 70.2 | 78.0 | 90.8 | 105.9 | 70.3 |
| 2 | 60.3 | 74.1 | 81.2 | 86.9 | 95.7 | 130.8 | 172.3 | 198.0 | 107.7 |
| 3 | 78.3 | 115.2 | 134.5 | 156.8 | 182.9 | 199.0 | >200 | >200 | 142.1 |
| 4 | 98.5 | 142.3 | 177.7 | >200 | >200 | >200 | >200 | >200 | 189.1 |
| 5 | 39.8 | 45.3 | 52.9 | 61.1 | 65.4 | 71.6 | 81.1 | 97.5 | 68.9 |
| 6 | 45.6 | 57.8 | 66.7 | 70.3 | 81.3 | 100.3 | 150.3 | 177.6 | 99.5 |
| 7 | 55.8 | 71.1 | 88.6 | 110.5 | 160.5 | 188.0 | 196.9 | >200 | 128.3 |
| 8 | 70.6 | 95.3 | 108.2 | 152.7 | >200 | >200 | >200 | >200 | 157.2 |
| 9 | 9.0 | 8.7 | 11.8 | 20.4 | 18.6 | 25.6 | 25.4 | 25.8 | 25.9 |
| 10 | 11.3 | 12.3 | 15.9 | 30.1 | 25.6 | 30.4 | 28.9 | 35.9 | 31.8 |
| 11 | 19.1 | 15.4 | 20.6 | 35.6 | 35.9 | 39.4 | 37.4 | 36.1 | 40.6 |
| 12 | 15.4 | 15.1 | 20.2 | 40.9 | 35.8 | 38.4 | 50.2 | 42.6 | 48.3 |

Judging from the results shown in Table 2, it is understood that developer as a binder for powdery raw materials does not need pre-treatment and it has necessary property for a binder.

Also, it was confirmed that by utilizing the heat generated at compressing and granulating or application of heat of 200 °C or less after compressing and granulating, the crush strength was increased further and binding effect was enhanced with this material.

### (Embodiment 2)

As an example to demonstrate the binding effect at mass-production apparatus, 3,600 kg of steelmaking dust, 2,100 kg of aluminum ash (including 25 % by weight to 35% by weight of metal aluminum) and 300 kg of two-part resinous toner were mixed by a mixer type apparatus made by SHINKO FLEX KK (a mixer built into mixing/molding line) for 30 minutes, then granulated by a dry and high pressure type briquette machine made in China (simulated volume production granulator, Model:LYQ3.0, production capacity on the brochure 3,000kg/hour). The granulated material were sampled 10 pieces every 30 min from the beginning of production for crush strength measurement to see variation in time. Also crush strength repeatability after heating was confirmed by heating samples at 100°C. The results of measurement are shown in Table 3. In Table 3, "time" denotes a sampling time elapsed from the start of production, "volume" denotes produced volume at sampling, "crush strength" denotes crush strength obtained by 10 sample average, and "crush strength after heating" denotes crush strength after heating at 100 °C obtained by 10 sample average.

**[Table 3]**

| SAMPLE NO. | TIME(min) | VOLUME(kg) | CRUSH STRENGTH (kg/mm²) | CRUSH STRENGTH AFTER HEATING (kg/mm²) |
|---|---|---|---|---|
| 1 | 0.0 | 50-100 | 71.6 | 115.6 |
| 2 | 0.5 | 550-650 | 71.9 | 115.8 |
| 3 | 1.0 | 1150-1250 | 71.3 | 115.2 |
| 4 | 1.5 | 1750-1850 | 71.5 | 115.9 |
| 5 | 2.0 | 2350-2450 | 71.9 | 116.0 |
| 6 | 2.5 | 2950-3050 | 72.1 | 115.5 |
| 7 | 3.0 | 3550-3650 | 71.8 | 115.7 |
| 8 | 3.5 | 4150-4250 | 71.3 | 115.4 |
| 9 | 4.0 | 4750-4850 | 71.8 | 115.1 |
| 10 | 4.5 | 5350-5450 | 72.0 | 115.3 |
| 11 | 5.0 | 4950-6000 | 71.5 | 115.9 |

It was confirmed from the results shown in Table 3 that the developer as binder showed good dispersiveness since there was no variation of crush strength over time even if the developer was added by 5 % by weight.

Then the same material was granulated by 200 kg test machine and its mold strength was measured to see the effect of molding temperature over molding strength. The result was shown in Table 4. In Table 4, "crush strength" denotes crush strength just after granulating obtained by 10 sample average, and "crush strength after heating" denotes crush strength after heating at 100 °C obtained by 10 sample average.

Mold temperature of volume production machine was 70 °C and grain temperature right after granulating was 50 °C, and average strength right after granulation was 71.7kg/mm².

Mold temperature of test machine was 50 °C and grain temperature right after granulating was 35 °C, and average strength right after granulation was 45.4kg/mm².

Crush strength of samples for post heat test from both volume production machine and test machine was 115 kg/mm² or more after heated at 100 °C.

From above results, it was concluded that a higher crush strength grain could be manufactured by utilizing of heat generated during molding, and by adding a step of heating at 200 °C or less after compressing and granulating, a higher molding strength grain could be manufactured.

**[Table 4]**

| CRUSH STRENGTH | CRUSH STRENGTH AFTER HEATING |
|---|---|
| 45.4 kg/mm² | 115.8 kg/mm² |

### (Embodiment 3)

Here, an embodiment of collection of valuable metals out of steelmaking dust is explained.

Major components of the steelmaking dust and aluminum ash subject to this embodiment are shown in Table 5.

The aspect of collection yield test is as shown below.

### [Furnace; (1) Electric furnace, (2) Ladle furnace]

### [Test operation]

### (1) Electric furnace:

### [Charging method]

### Charged with scrap into the electric furnace

### [Evaluation method]

Yield was calculated from molten metal contents since yields of Ni and Cr charged at test were fixed.

### (2) Ladle furnace

### [Charging method]

### Use material chatted into the ladle furnace

### [Evaluation method]

Yield was calculated by comparison of molten steel contents when it was as output from an electric furnace and after being added with refining material made of steelmaking dust.

Blending ratio tested was; 60 % by weight of steelmaking dust, 35 % by weight of aluminum ash and 5 % by weight of two-part resinous toner. The steelmaking dust was collected from manufacturing process of 18-8 stainless steel (Cr:17-19%, Ni:8-10%) and the material was as shown in embodiment 2 granulated by mass-production apparatus.

The major contents of the blended material are shown in Table 6.

**[Table 5]**

| MATERIAL | CONTENTS OF RAW MATERIAL (W/%) | | | | | | |
|---|---|---|---|---|---|---|---|
| | T-Fe | T-Cr | T-C | T-Ni | M-Al | Al₂O₃ | SiO₂ |
| STEELMAKING DUST | 48.7 | 7.9 | 7.5 | 4.5 | - | - | - |
| ALUMINUM ASH | 0.8 | - | 2.6 | - | 33.0 | 42.0 | 8.0 |

**[Table 6]**

| MATERIAL | CONTENTS OF BRIQUETTE (W/%) | | | | | | |
|---|---|---|---|---|---|---|---|
| | T-Fe | T-Cr | T-C | T-Ni | M-A1 | Al₂O₃ | SiO₂ |
| BLENDED BRIQUETTE | 29.2 | 4.8 | 8.6 | 2.5 | 11.6 | 14.7 | 2.8 |

Result of collection rate in molten steel when blended briquette was charged into ladle furnace is shown in Table 7.

As reference of valuable metal collection, result of collection rate when briquette with only steelmaking dust was added is also shown.

Among test results shown there, when the collection rates of valuable metals for steelmaking dust alone sample and aluminum ash blended sample are compared, apparently the sample, which includes aluminum ash and electrophotographic developer for binder effect and as reduction agent, shows higher rate. In case of steelmaking dust alone, it needs basicity adjusting agent for slag to efficiently collect valuable metals, also reductive components such as M - Al or C because the steelmaking dust include a lot of metal oxide. Since generally reduction efficiency is improved when the reduction agent is dispersed to whole material and collection rate is increased, using electrophotographic developer with external additive to enhance flowability increases reduction capability.

Other powder such as those collected from machining process using stainless cut wire as projectile can also be used to be blended to produce granulated refining material from steelmaking dust for valuable metal recycling. Also addition of Ni sludge is effective.

**[Table 7]**

| SAMPLE | COLLECTION RATE OF VALUABLE METAL (%) | | |
|---|---|---|---|
| | Fe | Cr | Ni |
| MIXED BRIQUETTE | 93 | 90 | 92 |
| STEELMAKING DUST | 35 | 20 | 33 |

## Claims

1. A granulating method of steel refining material for reductive steel refining, comprising the steps of:
mixing at least steelmaking dust, aluminum ash and a resin component of a toner binder so as to form a mixture; and
compressing and granulating the mixture so as to obtain a granulated steel refining material,
wherein the resin component comprises an additive for enhanced lubricity and flowability, and no external heating is applied in the step of mixing and the step of compressing and granulating.

2. A granulating method of steel refining material according to Claim 1, wherein the steel refining material is charged into electric furnace or ladle furnace so as to collect metal and metal oxide from the steelmaking dust.

3. A granulating method of steel refining material according to any one of Claims 1 and 2, wherein the step of mixing comprises a step of kneading the steelmaking dust, the aluminum ash and the resin component.

4. A granulating method of steel refining material according to Claim 3, wherein the step of kneading and the step of compressing and granulating generate heat, the heat generated in either step allows the resin component to bind the mixture.

5. A granulating method of steel refining material according to any one of Claims 1 to 4, wherein the resin component is obtainable from a developer for electrophotography, and the step of mixing is a step of mixing the steelmaking dust, the aluminium ash and the developer containing the resin component.

6. A granulating method of steel refining material according to Claim 5, wherein the developer is an off-specification product obtained in a process of developer manufacturing, or a recycled developer.

7. A granulating method of steel refining material according to any one of Claims 1 to 6, wherein heating at 50 °C to 200 °C is applied in a subsequent step of the compressing and granulating, so as to impart high crush strength and low powder content to the granulated steel refining material.

8. A granulating method of steel refining material according to any one of Claims 1 to 7, wherein the compressing is carried out by using a high pressure molder in the step of compressing and granulating.

9. A refining material for reductive refining of steel, comprising:
steelmaking dust;
aluminum ash; and
a resin component of a toner binder wherein the resin component comprises an additive for enhanced lubricity and flowability.

10. A refining material according to Claim 9, wherein the resin component is obtainable from a developer for electrophotography, and the refining material comprises the steelmaking dust, the aluminum ash and the developer containing the resin component.

11. A refining material according to Claim 10, wherein the developer is an off-specification product obtainable in a process of developer manufacturing, or a recycled developer.

12. A refining material according to any one of Claims 10 and 11, wherein the content of steelmaking dust is from 30 % by weight to 80 % by weight, the content of aluminum ash is from 10 % by weight to 50 % by weight, and the content of developer is from 2 % by weight to 20 % by weight.

13. A refining material according to any one of Claims 9 to 12, wherein the content of additive is from 0.01 parts by weight to 40 parts by weight relative to 100 parts by weight of the resin component.

14. A refining material according to any one of Claims 9 to 13, wherein the additive is at least one of metal oxide, metal salt of higher fatty acid, higher fatty acid amide, and wax.

15. A refining material according to Claim 14, wherein the additive comprises zinc stearate.

16. A refining material according to any one of Claims 9 to 15, wherein the steelmalking dust contains metal and metal oxide, the metal and metal oxide are collectable by charging the refining material into electric furnace or ladle furnace.

17. A refining material according any one of Claims 9 to 16, wherein the refining material is obtainable from the process comprising the steps of:
mixing at least the steelmaking dust, the aluminum ash and the resin component so as to form a mixture; and
compressing and granulating the mixture so as to obtain the granulated steel refining material,
wherein no external heating is applied in the step of mixing and the step of compressing and granulating.

18. A refining material according to Claim 17, wherein the step of mixing comprises a step of kneading the steelmaking dust, the aluminum ash and the resin component.

19. A refining material according to Claim 18, wherein the step of kneading and the step of compressing and granulating generate heat, the heat generated in either step allows the resin component to bind the mixture.

20. A refining material according to Claim 17, wherein heating at 50 °C to 200 °C is applied in a subsequent step of the compressing and granulating.
